# EUROPEAN PATENT APPLICATION

(11) **EP 2 017 226 A2**
(43) Date of publication of application: **21.01.2009**
(21) Application number: 08157259.6
(22) Date of filing: 30.05.2008
(51) Int. Cl.: C01G 31/00

(54) **Fabrication method of electrode material on the basis of V2O5, electrode material, and non-aqueous lithium ion secondary battery**

(30) Priority: 31.05.2007 JP 2007145922
(71) Applicant: Fuji Jukogyo Kabushiki Kaisha, Tokyo 160-8316 (JP)
(72) Inventor: Shiozaki, Ryuji, Shinjuku-ku, Tokyo 160-8316 (JP); Ando, Nobuo, Shinjuku-ku, Tokyo 160-8316 (JP); Kaneko, Satoko, Shinjuku-ku, Tokyo 160-8316 (JP); Taniguchi, Masahiko, Shinjuku-ku, Tokyo 160-8316 (JP)
(74) Representative: Sajda, Wolf E.

(57) **Abstract**

The ions other than lithium ions and having a greater ion radius are interposed, before the lithium ions are doped, as an interlayer securing member in a vanadium oxide having a layered crystal into which the lithium ions can be doped. Since the interlayer securing member is interposed, the doping or dedoping of the lithium ions into or from the vanadium oxide afterward can be smoothly performed. Sodium ions or the like can be employed as the interlayer securing member.

## Description

### BACKGROUND OF THE INVENTION

### 1. Field of the Invention

The present invention relates to a battery technology such as a lithium ion secondary battery or the like, and more particularly to a technology that is well adaptable to a battery employing a vanadium oxide, into which lithium ions are doped, as an active material.

### 2. Description of the Related Art

The technique described below has been examined by the present inventors for completing the present invention. The summary is as follows.

The increase in the traveling distance is essential for really popularizing an electric vehicle (EV). A lithium ion battery (LIB) has high energy density, so that it has been mentioned as one of the strongest candidates for a storage power source for an electric vehicle. An increase in the energy density compared with the current energy density has been demanded for the lithium ion battery. Further, the lithium ion battery should be excellent in safety when it is mounted to an electric vehicle.

The lithium ion battery having a vanadium oxide compound used for an active material of an electrode is under development. Attention has been given to the vanadium oxide compound, since high energy can be taken out from the vanadium oxide compound because of its high property of taking lithium ions into layers of its layered crystal.

Among the vanadium oxide compounds, vanadium pentoxide (V₂O₅) has attracted more attention. When the vanadium pentoxide is used for an active material of an electrode, a lithium ion battery can be increased in size and in capacity. Therefore, such a battery has been a promising storage battery for an electric vehicle as a safe battery having high energy density.

For example, Japanese Translation of PCT Application No. 2004-511407 discloses a proposal for using the vanadium pentoxide as an active material. It discloses that the vanadium pentoxide used as the active material is expressed by a chemical formula MₓV₂O₅A_{y}·nH₂O to be precise. In this formula, it discloses that M is a cation, and A is an anion, and since a strong inorganic acid is used in the fabrication, A is a nitrate ion, sulfate ion, or chlorine ion.

The present inventors have made a research for a vanadium oxide material into which lithium ions are readily doped or from which lithium ions are readily dedoped. During the research, the present inventors have found that the ease of doping or dedoping the lithium ions can be enhanced by reducing a layer length of a crystal structure of the vanadium oxide material, and disclosed this proposal in the application filed earlier than the present application.

This proposal is based on the idea that the layer length is specified to a layer length not more than a certain length, whereby the coming-in and going-out of the lithium ions to and from the layered crystal structure is smoothly maintained. This proposal is of course an excellent invention. However, it is more preferable, if there is means for securing smoothness of the coming-in and going-out of the lithium ions to and from the layered crystal structure without changing the layer length.

### SUMMARY OF THE INVENTION

An object of the present invention is to suppress the breakdown of a crystal structure involved with charging/discharging and to secure smoothness of coming-in and going-out of lithium ions, although the vanadium oxide material used for an active material of an electrode material is in a microcrystal state in order to exhibit high capacity.

The foregoing and other objects and novel features of the present invention will become apparent from the description of the present specification and attached drawings.

The summary of the representative inventions among the inventions disclosed in the present application will be briefly explained as follows. Specifically, in a vanadium oxide material that is an active material used as an electrode material, cations, which are other than lithium ions and have a large ion radius, are temporarily doped, and then, lithium ions are doped.

The effect obtained by the representative inventions among the inventions disclosed in the present application will be briefly explained as follows.

Specifically, in a vanadium oxide material that is an active material used as an electrode material, cations, which are other than lithium ions and have a large ion radius, are temporarily doped, and then, lithium ions are doped. Therefore, the breakdown of the crystal of the vanadium oxide involved with the dedoping of the lithium ions is suppressed, so that the smoothness of coming-in and going-out of the lithium ions can be secured.

### BRIEF DESCRIPTION OF THE DRAWINGS

- FIG. 1: is an explanatory view schematically showing the state in which lithium ions are doped and dedoped into and from a vanadium oxide;
- FIG. 2: is an explanatory view schematically showing the state in which lithium ions are not doped and de-doped into and from a vanadium oxide due to a breakdown of a crystal structure;
- FIG. 3: is an explanatory view schematically showing the state in which the lithium ions are smoothly doped and de-doped into and from the vanadium oxide since an interlayer securing member is interposed between layers of the crystal structure of the vanadium oxide;
- FIG. 4: is a flowchart showing a fabrication process of a non-aqueous lithium ion secondary battery using an active material having an interlayer securing member interposed between layers of a layered crystal structure according to the present invention;
- FIG. 5: is an explanatory view schematically showing a layered crystal structure with a short layer length;
- FIG. 6: is an explanatory view schematically showing a layered crystal structure with a long layer length;
- FIG. 7: is a diagram showing a schematic configuration of a non-aqueous lithium secondary battery to which the present invention is applicable;
- FIG. 8: is a graph showing the result of an X-ray diffraction of an active material used in the present invention; and
- FIG. 9: is table showing the effect of the present invention.

### DETAILED DESCRIPTION OF THE PREFERRED EMBODIMENTS

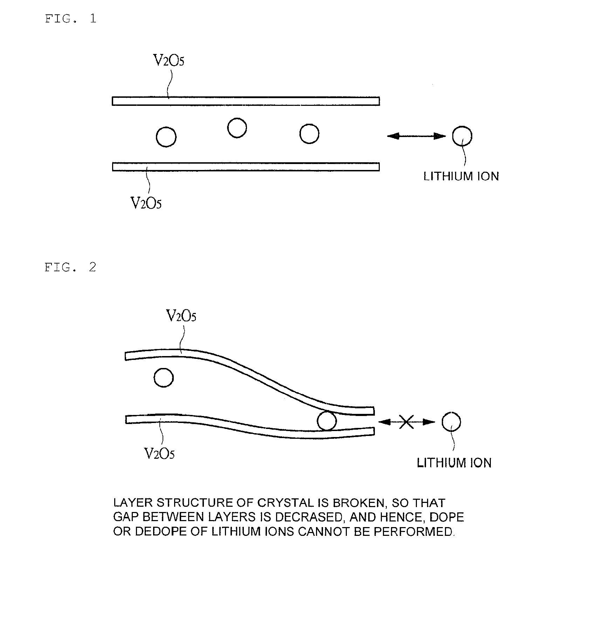

An embodiment of the present invention will be described in detail with reference to the drawings. FIG. 1 schematically shows the state in which lithium ions are doped to or dedoped from between layers of a layered crystal structure of a vanadium pentoxide. FIG. 2 schematically shows the state in which the layered structure is broken, because the lithium ions are released from between the layers. In FIGs. 1 and 2, the layered crystal structure of V₂O₅ is schematically illustrated as parallel layers opposite to each other in the vertical direction for better understanding.

The present invention is a technique relating to an electrode material or the like. Particularly, the present invention aims to achieve the ease of repeating doping or dedoping lithium ions in a vanadium oxide material in which the lithium ions are doped and used as an active material of a positive electrode of a lithium ion secondary battery or the like.

The present inventors have proposed previously that a layer length of a vanadium pentoxide is decreased so as to secure a property of coming-in and going-out of lithium ions, i.e., secure doping and dedoping of lithium ions to the layered crystal structure of the vanadium pentoxide. In the configuration described above, the layer length of the vanadium pentoxide is specified as 1 nm or more and 30 nm or less so as to decrease the length of the path of lithium ions, thereby securing smoothness of coming-in and going-out of the lithium ions.

However, in this proposal, the affect to the cycle characteristic or the like of the active material can greatly depend upon to what degree the crystal structure having the layer length of 30 nm or less is contained in the whole crystal structure. If the crystal structure having the short layer length is contained in 100 %, there is no problem. However, a suitable management is needed in the fabrication method of a crystal structure.

In view of this, the present inventors have considered the measure for securing smoothness of coming-in and going-out of lithium ions regardless of the layer length, i.e., even if the layer length is short or long. The present inventors have considered the fact that the crystal structure is broken when the lithium ions are dedoped, and substituted this fact for a simplified model, during the consideration for the solution from the microscopic viewpoint of the crystal structure.

The present inventors have supposed that the breakdown of the crystal structure is as if the upper one of two flat plate surfaces provided so as to be opposite to each other in the vertical direction with a predetermined space falls down, in a simplified model. In this model, in order to prevent the upper flat plate surface from falling down, a column is mounted between the upper flat plate surface and the lower flat plate surface.

In view of this, the present inventors have applied the simple model, in which the column is provided, to the crystal structure, and found that the breakdown of the crystal can easily be prevented by interposing alternatives to the column between the layers. Specifically, the present inventors have found that ions are interposed between the layers of the layered crystal to serve as alternatives to the column. Since the maximum object is to secure the smoothness of coming-in and going-out of the lithium ions involved with the breakdown of the crystal, it is preferable that the ions of which radius is greater than that of the lithium ion are interposed.

The ions to be interposed can be anions, but the present inventors have considered that, since the lithium ions are cations, the ions to be interposed are preferably cations. The present inventors have considered that, thanks to the interposed ions, the gap between the layers of the layered crystal structure is maintained, so that the breakdown of the crystal caused when the lithium ions are dedoped can be prevented.

The ions of which radius is greater than that of the lithium ions are selected as the ions to be interposed between the layers as described above. With this structure, it is considered that the gap between the layers is increased, and hence, the lithium ions are more easily doped and dedoped repeatedly. It should go without saying that it is important that the ions, which function as an interlayer securing member for securing the gap between the layers in order to maintain or increase the gap between the layers of the layered crystal structure, should not break down the layered crystal structure by increasing too much the gap between the layers.

The present inventors have considered that the interlayer securing member interposed between the layers of the layered crystal structure is doped before the lithium ions are doped, by which the lithium ions is easily doped or dedoped after that. Examples of the cations include alkali metal ions such as sodium ions, or caesium ions.

When the lithium ions are easily doped or dedoped into the gap between the layers of the layered crystal structure of the vanadium pentoxide, it is naturally necessary that the gap between the layers of the vanadium pentoxide is maintained to at least the gap by which the lithium ions are easily doped or dedoped as schematically shown in FIG. 1.

However, in actuality, in the crystal structure of the vanadium pentoxide to which the lithium ions are doped between the layers, the crystal structure is broken down due to the dedope of the lithium ions as shown in FIG. 2, for example. It is supposed that not only the crystal structure at the end from which the lithium ions go out but also the peripheral crystal structure are distorted.

Therefore, it is understood that the lithium ions are not doped again or lithium ions are difficult to be doped due to the breakdown of the crystal structure. Accordingly, when the vanadium pentoxide schematically shown in FIG. 1 is used as the active material, and charging and discharging are repeated, it is supposed that the crystal structure is broken down every charging and discharging, with the result that the discharging characteristic is gradually deteriorated.

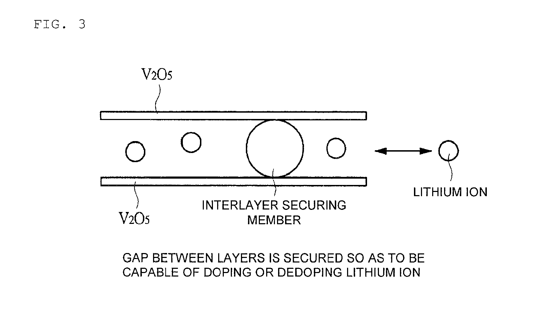

In view of this, the present inventors have considered that the lithium ions can be smoothly doped or dedoped by doping the interlayer securing member into the gap between the layers of the layered crystal structure of the vanadium pentoxide before the lithium ions are doped as described above. This state is schematically shown in FIG. 3.

FIG. 3 schematically shows the state in which an interlayer securing member which is the ions having the radius greater than the radius of the lithium ions, is interposed between the upper layer and the lower layer of the layered crystal structure of the vanadium pentoxide, whereby the coming-in and going-out of the lithium ions to and from the gap between the layers of the layered crystal structure is smoothly secured.

The breakdown of the crystal structure that causes the crush of the gap between the layers is prevented or avoided, with the result that the coming-in and going-out, i.e., doping and de-doping, of the lithium ions to and from the gap between the layers of the vanadium pentoxide is smoothly maintained.

The current experiment made by the present inventors shows that the interlayer securing member at least in an amount of 0.01 mol or more and 0.5 mol or less with respect to 1 mol of a vanadium atom of the vanadium oxide compound such as the vanadium pentoxide is effective. When the amount of the interlayer securing member is less than 0.01 mol, the interlayer securing function can not sufficiently be achieved. When the amount of the interlayer securing member exceeds 0.5 mol, the crystal structure can be changed into the crystal structure other than V₂O₅. Specifically, the interlayer securing member such as sodium ions, caesium ions, or the like may be doped into the gap between the layers of the vanadium oxide compound such as the vanadium pentoxide within the above described range.

The vanadium oxide compound such as the vanadium pentoxide in which the interlayer securing member is interposed between the layers can be obtained as follows. Specifically, when sodium ions are used as the interlayer securing member, mixed solution of a vanadium pentoxide and a sodium compound is stirred for a predetermined time, and then, filtered. The filtrate is depressurized and concentrated to obtain a solid material. The obtained solid material is vacuum-dried, whereby the vanadium pentoxide in which sodium ions are doped between the layers can be synthesized.

After the solidification, the vanadium pentoxide is pulverized to have a predetermined particle size by means of a ball mill or the like, and sieved to be classified so as to manufacture powders of an active material as a positive electrode material. The vanadium pentoxide having caesium ions used as the interlayer securing member can be synthesized in the same manner.

The vanadium oxide compound such as the vanadium pentoxide having sodium ions or the like doped into the layers is synthesized as described above. In order to dope the lithium ions into the thus synthesized vanadium pentoxide, a positive electrode is formed with the thus synthesized vanadium pentoxide used as an active material, while a lithium electrode using lithium metal is formed as a counter electrode, thereby fabricating a battery. With this structure, the lithium ions can be doped into the vanadium pentoxide in the positive electrode.

Specifically, in the present invention, the ions other than the lithium ions are doped into the vanadium oxide compound such as the vanadium pentoxide in a chemical process, and the lithium ions are doped in a physical process afterward for short-circuiting the positive electrode and the counter electrode.

A vanadium pentoxide (V₂O₅) can be given as usable vanadium oxide compound in the present invention.

As described above, the lithium ions are chemically doped into the vanadium oxide compound such as the vanadium pentoxide having the layered crystal structure in which the above described interlayer securing member is interposed between the layers. The doped amount of the lithium ions is preferably in a ratio of not less than 0.1 and not more than 10 in a molar ratio with respect to the vanadium oxide compound such as the vanadium pentoxide, more preferably in a ratio of not less than 0.1 and not more than 6. When the doped amount of the lithium ions is less than 0.1 in a molar ratio, the doping effect is not sufficiently exhibited. On the other hand, when the doped amount of the lithium ions exceeds 10 in a molar ratio, the vanadium oxide is unpreferably reduced to a metal.

In the specification of the present invention, the term "dope" involves "occlude", "carry", "absorb" or "insert", and specifically a phenomenon where lithium ions enter the positive-electrode active material. The term "dedope" is specifically a phenomenon where lithium ions exit from the positive-electrode active material.

During the synthesis of the vanadium oxide, as the active material, having the interlayer securing member, a sulfur-containing conductive polymer can be contained as a sulfur-containing organic material. Although details are unknown, it is thought that, when a monomer corresponding to the sulfur-containing conductive polymer is present during the synthesis, the oxygen concentration of the reaction system is kept constant with the monomer as an oxygen inhibitor, and the structure of the synthesized vanadium oxide is controlled. The sulfur-containing conductive polymer has a redox activity and contains sulfur. As an example of the corresponding monomer, 3,4-ethylene dioxythiophene is used.

However, since the sulfur-containing conductive polymer decrease the performance as the active material for the product after the reaction is ended, it is preferably removed by the depressurization and concentration from a final product in order to enhance the performance of the active material.

It is confirmed that the active material, having the interlayer securing member, to which the fabrication technique according to the present invention is applied, and which is used for the positive electrode to which lithium ions have not yet been doped, has a peak at around the diffraction angle 2θ = 10° in an X-ray diffraction pattern, for example.

The active material thus obtained is mixed with a binder such as polyvinylidene fluoride (PDVF) and preferably conductive particles to form a material for the positive electrode, and the obtained material is coated onto a conductive substrate, whereby the positive electrode having no lithium ions doped can be fabricated. It is preferable that the layer of the positive electrode material having no lithium ions doped is formed in a thickness of, e.g., 10 µm to 100 µm.

Examples of the conductive particles include conductive carbon (conductive carbon such as Kitchen black), metal such as copper, iron, silver, nickel, palladium, gold, platinum, indium, tungsten, or conductive metal oxide such as indium oxide, tin oxide. The conductive particles may be contained in a ratio of 1 to 30 % of the weight of the above described vanadium oxide.

A conductive substrate exhibiting conductivity at least at the surface being in contact with the positive electrode material having no lithium ions doped is used as the substrate (current-collector) supporting the positive-electrode material layer having no lithium ions doped. The substrate can be made of a conductive material such as a metal, conductive metal oxide, conductive carbon. It is preferable that the substrate is made of copper, gold, aluminum or an alloy thereof, or conductive carbon. Alternatively, a substrate of which main body made of a non-conductive material with coating of a conductive material can be applicable.

The positive electrode having no lithium ions doped is formed by using the above described active material, a lithium electrode serving as a negative electrode that is a counter electrode is formed, and an electrolyte is interposed between both electrodes, whereby a battery can be fabricated. Specifically, the positive electrode having no lithium ions doped and the lithium electrode are short-circuited in the battery structure described above, with the result that a positive electrode for a non-aqueous lithium secondary battery is perfectly formed.

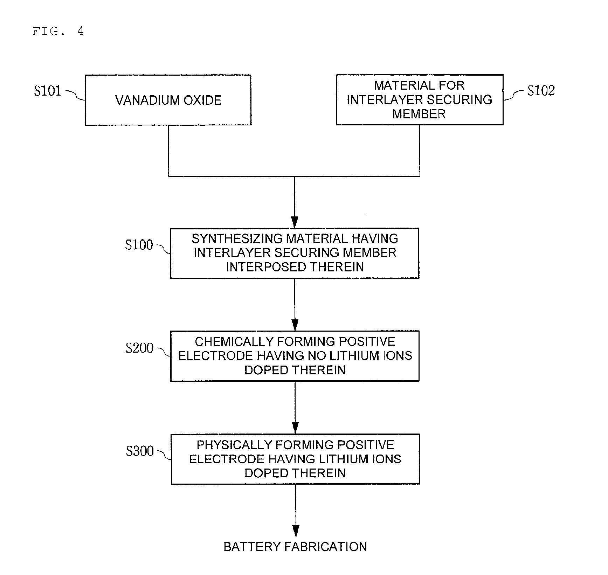

FIG. 4 shows a flowchart of the fabrication of the non-aqueous lithium ion secondary battery according to the present invention. Specifically, a vanadium oxide such as a vanadium pentoxide is prepared at step S101, and a material for an interlayer securing member such as ions of sodium, is prepared at step S102. The vanadium pentoxide and the material for the interlayer securing member prepared at steps S101 and S102 are mixed with water or the like, and stirred for a predetermined time. Thereafter, the resultant is filtered, and the filtrate is depressurized and concentrated. The concentrate is dried, pulverized, and sieved to be classified, so as to synthesize an active material having the interlayer securing member at step S100.

At step S200, a positive electrode having no lithium ions doped is formed by using the active material obtained in the chemical process as described above. At step S300, a lithium electrode that is a counter electrode is formed, as a negative electrode, to the positive electrode having no lithium ions doped, which is fabricated at step S200, and then, the lithium ions are chemically doped to form the positive electrode having the lithium ions doped therein. A non-aqueous lithium ion secondary battery can be fabricated by using the positive electrode having the lithium ions doped therein in above described manner.

In the non-aqueous lithium ion secondary battery thus configured, the negative electrode used as the counter electrode can be made of a lithium material generally used. Examples of the lithium material include a lithium metal material such as a metal lithium, lithium alloy (e.g., Li-Al alloy), an intermetallic compound of such as a metal of tin or silicon and a lithium metal, a lithium compound such as lithium nitride.

Usable lithium salts as the electrolyte include CF₃SO₃Li, C₄F₉SO₈Li, (CF₃SO₂)₂NLi, (CF₃SO₂)₃CLi, LiBF₄, LiPF₆, LiClO₄. A solvent that dissolves the electrolyte is a non-aqueous solvent.

Examples of the non-aqueous solvent include a chain carbonate, cyclic carbonate, cyclic ester, nitrile compound, acid anhydride, amide compound, phosphate compound, amine compound. Specific examples of the non-aqueous solvent include ethylene carbonate, diethyl carbonate (DEC), propylene carbonate, dimethoxyethane, γ-butyrolactone, n-methyl pyrrolidone, N,N'-dimethyl acetoamide, acetonitrile, mixture of propylene carbonate and dimethoxyethane, or mixture of sulfolane and tetrahydrofuran.

It is described in the above described explanation that the vanadium pentoxide is used as the active material having the interlayer securing member. The crystal state of the vanadium pentoxide is a macroscopically amorphous state in which the layer length is not specified. The vanadium pentoxide having a crystal state with a long layer length or a crystal state with a short layer length can be used. It is expected that, by using the crystal state with the short layer length, the effect can be increased synergistically by the factor that the layer length is short and the factor that the interlayer securing member is interposed.

In the crystal state with a short layer length, the breakdown of the crystal structure caused by the dedope of the lithium ions is difficult to occur. Since the ions having a radius greater than that of the lithium ion are interposed as the interlayer securing member in the present invention, the gap between the layers is maintained, or further increased. Therefore, it is considered that the doping or dedoping of the lithium ions is more effectively acted in the case of the short layer length.

The crystal state in which the layer length is not more than 30 nm but not zero means a macroscopic amorphization with keeping the layered crystal structure of the vanadium pentoxide. The state can be obtained by decrease of the layer length of the layered crystal material (microfabrication). For example, the layered crystal state with a long layer length is cut, so that the layered crystal state with a short layer length appears.

The above described state cannot be realized if the entire structure is in the amorphous state. Therefore, the amorphization is stopped during the progression in order to achieve the above described state, i.e., in order that the layered crystal state with a short layer length can be present.

The macroscopic amorphization means as follows. Specifically, from the microscopic viewpoint in which the observation with not more than nm-order can be performed, it is confirmed that only the crystal structure with a layer length of not more than 30 nm is present, or this crystal structure and the amorphous state are co-present. On the other hand, from the macroscopic viewpoint in which only the observation with µm-order that is greater than nm can be performed, the amorphous structure in which the crystal structure is randomly arranged is observed.

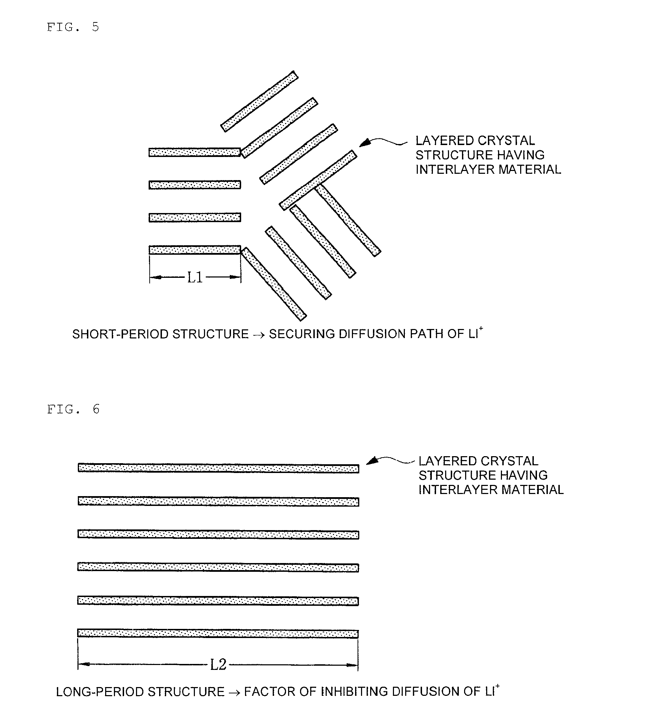

Specifically, as schematically shown in FIG. 5, the layer length L1 of a microcrystal particle of a so-called short-period structure with a short layer length is preferred to fall within a range of 1 nm or more and 30 nm or less without including Zero (0). From the viewpoint of going in and out of lithium ions between the layers, when the layered crystal is less than 1 nm, the lithium ions are difficult to be doped or dedoped, so that high capacity is difficult to achieve.

On the other hand, when the layered crystal exceeds 30 nm, it is susceptible to the breakdown of the crystal structure involved with the charging and discharging, so that the cycle characteristic can be deteriorated. Therefore, the layer length is preferably not more than 30 nm not including 0, more preferably within a range of 1 nm or more and 30 nm or less, and most preferably within a range of 5 nm or more and 25 nm or less.

As described above, the path relating to the coming-in and going-out of the lithium ions between the layers is shortened to make the lithium ions easily go in and out between the layers of the vanadium oxide, whereby the charging capacity and cycle characteristic can be enhanced. As shown in FIG. 6, in a so-called long-period structure in which the layer length L2 is long, the lithium ions are difficult to come in and go out between the layers, compared to the short-period structure having the short layer length L1.

In a case where the layered crystal structure of the microcrystal particle of the vanadium oxide with the layer length of not more than 30 nm not including zero is 100 % in terms of the area ratio of a microcrystal particle in any cross-section, the amorphous state is not present, and only the layered crystal state is present. The layered crystal with the layer length of not more than 30 nm not including zero can of course be 100 % in terms of the area ratio.

It suffices that the layered crystal structure occupys at least 30 % of the cross-section of the vanadium oxide in terms of the area ratio. However, since the cycle characteristic or the like by the charging and discharging can be enhanced similarly by applying the present invention even if the layer length is more than 30 nm, the area ratio of the crystal structure with the layer length not more than 30 nm can be other than 30 %, i.e., the area ratio of the above discribed crystal structure can be less than 30 %.

The electrolyte layer interposed between the positive electrode and the negative electrode can be a solution in the non-aqueous solvent in which the electrolyte is dissolved, or can be a polymer gel (polymer gel electrolyte) containing this electrolyte solution.

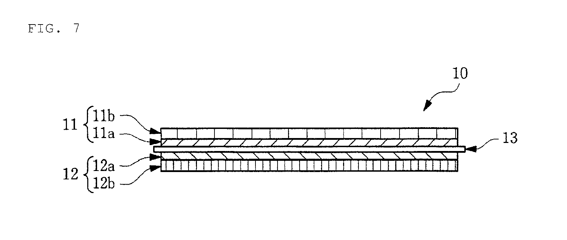

The lithium secondary battery can take the configuration shown in FIG. 7. Specifically, a non-aqueous lithium secondary battery 10 has a positive electrode 11 and a negative electrode 12, which are opposite to each other with an electrolyte layer 13 interposed therebetween. The positive electrode 11 is made of a positive-electrode active material 11a having a layered crystal structure in a predetermined amount and a substrate 11b as a current collector. The layer of the positive-electrode active material 11a is formed on the surface of the substrate 11b as shown in FIG. 7.

Similarly, the negative electrode 12 is made of a negative-electrode active material 12a and a substrate 12b as a current collector, wherein the layer of the negative-electrode active material 12a is formed on the surface of the substrate 12b. The positive electrode 11 and the negative electrode 12 are opposite to each other with the electrolyte layer 13 interposed therebetween.

The present invention will be explained in detail with reference to Examples. It is described in the following Examples that a vanadium pentoxide including sodium ions or caesium ions as an interlayer securing member is used as an active material. However, the present invention is not limited to Examples described below. It is needless to say that the modifications are possible without departing from the scope of the present invention, and applicable to the other active materials or other batteries.

### EXAMPLES

### Example 1

In Example 1, sodium ions are used as an interlayer securing member for a vanadium pentoxide as an active material. The active material into which sodium ions are chemically doped as the interlayer securing member is synthesized as follows. Specifically, 30 g of a commercially available vanadium pentoxide was weighed and dispersed in 1000 ml of pure water. 0.6 g of sodium hydroxide was weighed separately, and dispersed in 300 ml of pure water. Thereafter, the solution of sodium hydroxide was added to the solution of the vanadium pentoxide, and then, the resultant was stirred and mixed for 20 hours at 25 °C.

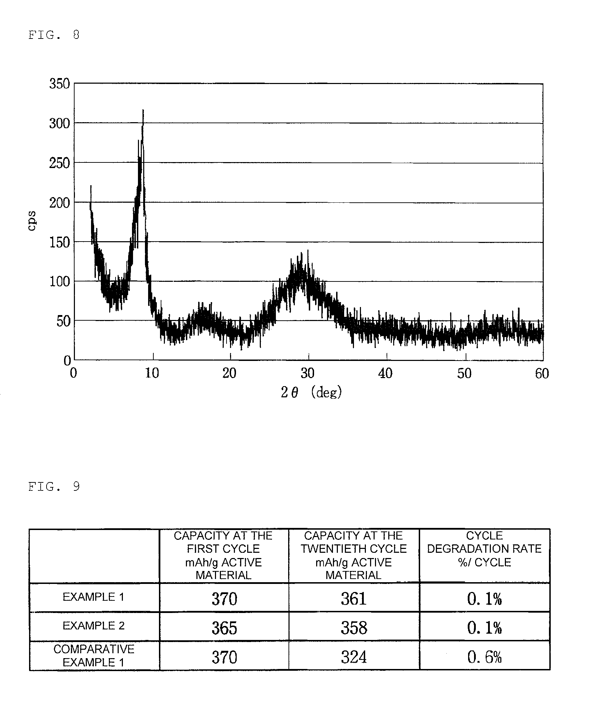

Then, the reaction solution was filtered, and the solution part was depressurized and concentrated at 40 hPa at 45 °C, thereby obtaining a solid material. The obtained solid material was vacuum-dried at 70 °C for 12 hours to obtain an orange solid material. The obtained solid material was pulverized by means of a ball mill or the like, and sieved to be classified so as to synthesize an active material having a predetermined particle size, having an interlayer securing member, and having no lithium ions doped therein. The Na amount as prepared was detected according to an ICP analysis, so that the active material having no lithium ions doped therein was Na_{0 1}V₂O₅.0.3H₂O. The peak was observed around 2θ = 10° as shown in FIG. 8 from the result of the X-ray diffraction of the active material.

A positive electrode having no lithium ions doped therein was formed by using the active material having no lithium ions doped therein and having the interlayer securing member. The active material having no lithium ions doped therein thus synthesized, a carbon black, and a polyvinyliden fluoride (PVdF) as a binder were mixed in a weight ratio of 90 : 5 : 5, and then, the resultant was dispersed with n-methylpyrrolidone (NMP) so as to prepare a slurry. This slurry was uniformly coated on a current collector made of aluminum.

The resultant was dried under a depressurized condition at 150 °C, and pressed, whereby the positive electrode having no lithium ions doped therein and having the active material layer in a thickness of 100 µm was formed. This positive electrode having no lithium ions doped therein was cut into 20 mm x 20 mm, and then, an aluminum terminal was welded to a non-coated portion.

On the other hand, a lithium metal pressed against a current collector made of a Ni foil was defined as a negative electrode that was a counter electrode, and the positive electrode having no lithium ions doped therein and the negative electrode were made opposite to each other with a separator made of a polyolefin microporous film interposed therebetween.

The resultant was inserted into an aluminum laminate, and then an electrolyte obtained by dissolving lithium fluoroborate (LiBF₄) at 1 mol/l into a solvent mixture containing ethylene carbonate and diethyl carbonate at the weight ratio of 1 : 3 was injected. Thereafter, the opening portion was sealed by a thermal welding to fabricate a battery cell. Two cells were fabricated, and subject to a charging evaluation. FIG. 9 shows the result of the charging evaluation.

### Example 2

In this Example 2, a case in which caesium ions are used as the interlayer securing member for a vanadium pentoxide of an active material is described. The active material into which caesium ions are chemically doped as the interlayer securing member is synthesized as follows. Specifically, 30 g of a commercially available vanadium pentoxide was weighed and dispersed in 1000 ml of pure water. 2.35 g of caesium carbonate was weighed separately, and dispersed in 300 ml of pure water.

Thereafter, the solution of caesium carbonate was added to the solution of the vanadium pentoxide, and then, the resultant was stirred and mixed for 20 hours at 25°C. Then, the reaction solution was filtered, and the solution part was depressurized and concentrated at 40 hPa and 45 °C, thereby obtaining a solid material. The obtained solid material was vacuum-dried at 70 °C for 12 hours to obtain an orange solid material.

The obtained solid material was pulverized by means of a ball mill or the like, and sieved to be classified so as to synthesize an active material having a predetermined particle size, and having no lithium ions doped. The Cs amount as prepared was detected according to an ICP analysis, so that the active material having no lithium ions doped therein was Cs_{0.1}V₂O₅·0.3H₂O. The peak was observed around 2θ = 10° as shown in FIG. 8 from the result of the X-ray diffraction of the active material.

A positive electrode having no lithium ions doped therein was fabricated in the same manner as Example 1 by using the thus obtained active material having no lithium ions doped therein, and then, a lithium electrode was formed as a counter electrode, whereby a non-aqueous lithium ion secondary battery was fabricated. FIG. 9 shows the result of the charging/discharging evaluation for the non-aqueous lithium ion secondary battery.

### Comparative Example

Different from Examples 1 and 2, an active material having no interlayer securing member, which is the ions having a greater radius other than the lithium ions, is used in this Comparative Example. The active material was formed as follows. Specifically, instead of the sodium hydroxide in Example 1, an amount of 0.33 g of lithium hydroxide was employed to synthesize orange powder materials.

The Li amount as prepared was detected according to an ICP analysis, so that the active material thus synthesized was Li₀₁V₂O₅·0.3H₂O. The peak was observed around 2θ = 10° as shown in FIG. 8 from the result of the X-ray diffraction of the active material. Thereafter, a non-aqueous lithium ion secondary battery was fabricated in the same manner as Example 1, and the charging/discharging evaluation was performed. FIG. 9 shows the result.

It was understood from FIG. 9 that the cycle degradation ratio in Example 1 in which the interlayer securing member was interposed was 0.1 %, which was extremely higher than 0.6 % of Comparative Example. The capacity at the first cycle was 370 mAh/g in both of Example 1 and Comparative Example 1. However, the capacity at the twentieth cycle in Example 1 was 361 mAh/g, while the capacity at the twentieth cycle in Comparative Example was 324 mAh/g, which was extremely lower than that in Example 1.

From this result, it was supposed that a breakdown of the crystal structure was caused due to the repeated charging/discharging, which was exhibited in the characteristic such as the cycle degradation ratio, when the interlayer securing member such as sodium ions was not interposed between the layers.

It was confirmed that, in Example 2, the initial capacity at the first cycle was 365 mAh/g, which was lower than that in Comparative Example, but the capacity at the twentieth cycle was 358 mAh/g, which was higher than 324 mAh/g in Comparative Example. From this, the effect by the interlayer securing member was confirmed like Example 1.

On the other hand, there was no difference in the cycle degradation ratio between Example 1 and Example 2, but it was found that the value of the capacity per unit weight of active material at the first cycle and the value of the capacity at the twentieth cycle were different such that the value in the case of using caesium ions in Example 2 was lower than the value in the case of using sodium ions. The molecular amount of the active material was increased, so that the electric capacity per weight of active material was decreased.

The invention made by the present inventors have specifically been described with reference to the embodiments and examples. The present invention is not limited to the above described embodiment, but various modifications are possible without departing from the scope of the invention.

The present invention is effectively useful in the field of a lithium secondary battery using a vanadium oxide, into which lithium ions are doped therein or de-doped therefrom, as an active material of a positive electrode.

## Claims

1. A synthesis method for fabricating an electrode material employing a vanadium oxide, which has a layered crystal, into which lithium ions can be doped, as an active material, the method comprising:
a doping process for doping an interlayer securing member, which is made of ions other than the lithium ions, into a gap between layers of the layered crystal for securing the gap between the layers.

2. The method according to claim 1,
wherein the doping process for doping the interlayer securing member is performed before a process for doping the lithium ions.

3. The method according to claim 1 or 2,
wherein the interlayer securing member consists of cations, other than the lithium ions, whose radii are greater than that of the lithium ions.

4. The method according to any one of claims 1 to 3,
wherein the doping amount of the interlayer securing member is less than the doping amount of the lithium ions into the gap between the layers.

5. The method according to any one of claims 1 to 4,
wherein the interlayer securing member is doped into the vanadium oxide in an amount of 0.5 mol or less and not including 0 for 1.0 mol of vanadium atom in the vanadium oxide.

6. The method according to claim 5,
wherein the interlayer securing member is doped into the vanadium oxide in an amount of 0.01 mol or more for 1.0 mol of vanadium atom in the vanadium oxide.

7. The method according to any one of claims 1 to 6,
wherein the interlayer securing member is selected from alkali metal ions.

8. The method according to any one of claims 1 to 7,
wherein the interlayer securing member is one selected from a group consisting of sodium ions and caesium ions.

9. The method according to any one of claims 1 to 8,
wherein the vanadium oxide is a vanadium pentoxide.

10. An electrode material in which lithium ions are doped into a gap between layers of a layered crystal as an active material,
wherein the lithium ions and an interlayer securing member, which consists of cations other than lithium ions, for securing the gap between the layers are doped into the gap between the layers of the layered crystal.

11. The electrode material according to claim 10,
wherein the cations other than the lithium ions are doped in an amount less than the amount of the lithium ion.

12. The electrode material according to claim 10 or 11,
wherein the cations other than the lithium ions are selected from alkali metal ions.

13. The electrode material according to any one of claims 10 to 12,
wherein the cations other than the lithium ions are the ions selected from a group consisting of sodium ions and caesium ions.

14. The electrode material according to any one of claims 10 to 13,
wherein the electrode material is a vanadium oxide used as an active material for the electrode.

15. The electrode material according to claim 14,
wherein the vanadium oxide is a vanadium pentoxide.

16. The electrode material according to claim 15,
wherein the vanadium pentoxide has a layer length of 30 nm or less and not including 0.

17. A non-aqueous lithium ion secondary battery (10) including a positive electrode (11) having a vanadium oxide into which lithium ions are doped, as an active material, and a negative electrode (12) that is opposite to the positive electrode (11) via a non-aqueous electrolyte (13), the battery (10) comprising:
a positive electrode (11) using an electrode material fabricated by means of the synthesis method according to any of claims 1 to 9 or an electrode material according to any of claims 10 to 16.
